# EUROPEAN PATENT APPLICATION

(11) **EP 4 109 428 A1**
(43) Date of publication of application: **28.12.2022**
(21) Application number: 21756408.7
(22) Date of filing: 02.02.2021
(51) Int. Cl.: G07G 1/00

(54) **INFORMATION PROCESSING SYSTEM, INFORMATION PROCESSING DEVICE, AND INFORMATION PROCESSING METHOD**

(30) Priority: 18.02.2020 JP 2020025605
(71) Applicant: Kyocera Corporation, Kyoto-shi Kyoto 612-8501 (JP)
(72) Inventor: DAI, Xiaoyan, Kyoto-shi, Kyoto 612-8501 (JP)
(74) Representative: Viering, Jentschura & Partner mbB Patent- und Rechtsanwälte
(86) International application number: PCT/JP2021/003757
(87) International publication number: WO 2021/166632

(57) **Abstract**

An information processing system includes a first imaging unit and a controller configured to perform processing relating to an image that is captured by the first imaging unit. The controller performs the processing based on an image captured at a first stage at which an object is put into a container and an image captured at a second stage at which the object is taken out of the container.

## Description

### CROSS-REFERENCE TO RELATED APPLICATIONS

The present application claims the priority of Japanese Patent Application No. 2020-25605 filed on February 18, 2020, the disclosure of which is hereby incorporated by reference in its entirety.

### TECHNICAL FIELD

The present invention relates to an information processing system, an information processing apparatus, and an information processing method.

### BACKGROUND OF INVENTION

For example, in the invention disclosed in Patent Literature 1, when checking out of a purchased product in the retail industry, movement of the product from a shopping basket to a storage bag is tracked so as to determine whether the product has been properly scanned.

### CITATION LIST

### PATENT LITERATURE

Patent Literature 1: Japanese Unexamined Patent Application Publication No. 2011-54038

### SUMMARY

In an aspect of the present disclosure, an information processing system includes a first imaging unit and a controller. The controller is configured to perform processing relating to an image that is captured by the first imaging unit. The controller performs the processing based on an image captured at a first stage at which an object is put into a container and an image captured at a second stage at which the object is taken out of the container.

In another aspect of the present disclosure, an information processing apparatus includes a controller. The controller is configured to perform processing relating to an image that is captured by the first imaging unit. The controller performs the processing based on an image captured at a first stage at which an object is put into a container and an image captured at a second stage at which the object is taken out of the container.

In another aspect of the present disclosure, an information processing method includes causing a first imaging unit to perform imaging at a first stage, causing the first imaging unit to perform imaging at a second stage, and performing processing based on an image captured by the first imaging unit at the first stage and an image captured by the first imaging unit at the second stage. At the first stage, an object is put into a container. At the second stage, the object is taken out of the container.

### BRIEF DESCRIPTION OF THE DRAWINGS

FIG. 1 is a functional block diagram illustrating a schematic configuration of an information processing system according to the present disclosure.
FIG. 2 is a conceptual diagram relating to an imaging method and the like at a first stage.
FIG. 3 is a conceptual diagram relating to an imaging method and the like at a second stage.
FIG. 4A is a first flowchart relating to an information processing method of an information processing system according to a first embodiment of the present disclosure.
FIG. 4B is a second flowchart relating to the information processing method of the information processing system according to the first embodiment of the present disclosure.
FIG. 5 is a conceptual diagram relating to variations of the imaging method and the like at the first stage.
FIG. 6A is a first flowchart relating to an information processing method of an information processing system according to a second embodiment of the present disclosure.
FIG. 6B is a second flowchart relating to the information processing method of the information processing system according to the second embodiment of the present disclosure.
FIG. 7A is a first flowchart relating to an information processing method of an information processing system according to a third embodiment of the present disclosure.
FIG. 7B is a second flowchart relating to the information processing method of the information processing system according to the third embodiment of the present disclosure.
FIG. 8 is a conceptual diagram of variations of a first list used in the information processing methods of the information processing systems according to the first to third embodiments of the present disclosure.

### DESCRIPTION OF EMBODIMENTS

Embodiments of an information processing system according to the present disclosure will be described below with reference to the drawings.

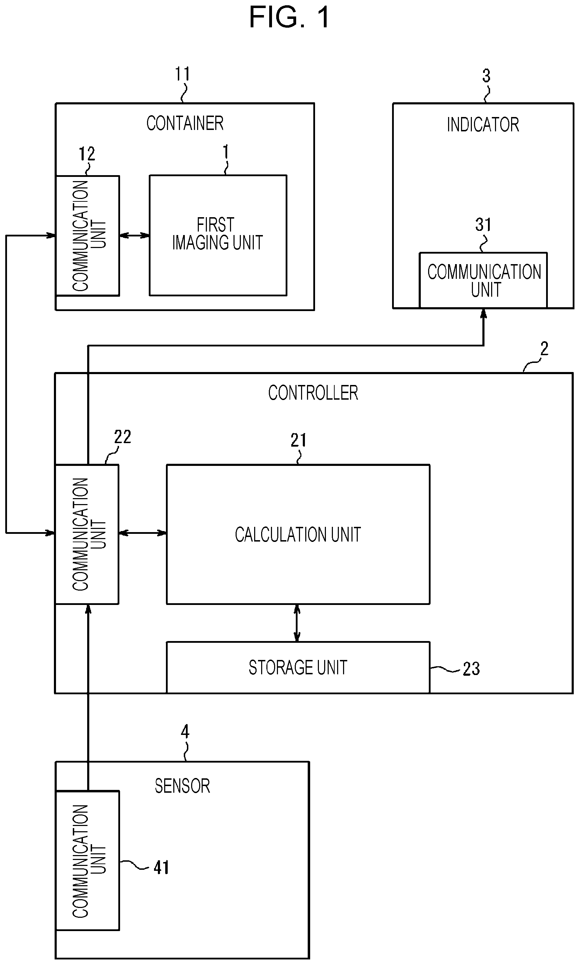

As illustrated in FIG. 1, the information processing system according to the present disclosure includes a first imaging unit 1 and a controller 2. The information processing system may also include an indicator 3 and a sensor 4.

In the drawings, which will be referred to in the following description, solid arrows connecting functional blocks each indicate the flow of a control signal or the flow of data to be transmitted and received. The communications indicated by the arrows may each be either wired communication or wireless communication or may each be a combination of wired communication and wireless communication.

The first imaging unit 1 captures an image of an object that is taken in and out of a container 11 for temporarily storing the object.

The first imaging unit 1 includes an imaging optical system and an imaging element so as to generate an image by imaging an object. The imaging optical system includes optical members such as, for example, at least one lens and a diaphragm. The lens may be any lens regardless of focal distance and may be, for example, a common lens, a wide-angle lens including a fish-eye lens, or a zoom lens with variable focal distance. The imaging optical system focuses a subject image onto a light receiving surface of the imaging element. The imaging element includes, for example, a CCD (charge coupled device) image sensor or a CMOS (complementary metal-oxide semiconductor) image sensor. The imaging element generates an image by imaging the subject image focused on the light receiving surface.

Note that the first imaging unit 1 may continuously capture still images at any frame or may capture still images discontinuously at specific timings. The first imaging unit 1 may also capture a moving image.

The first imaging unit 1 may be provided in any form as long as it can capture an image of an object that is taken in and out of the container 11 including a shopping basket or a shopping cart. For example, the container 11 may include the first imaging unit 1 or the first imaging unit 1 may be provided in the form of a portable electronic terminal such as, for example, a smartphone or a business terminal. Alternatively, a product shelf, a ceiling, a cash register, or the like of a retail store may include the first imaging unit 1. In particular, the first imaging unit 1 can easily capture an image of an object, which is taken in and out of the container 11, when the container 11 includes the first imaging unit 1. In the case where a portable electronic terminal includes the first imaging unit 1, the container 11 may include a holder for holding the portable electronic terminal. Note that the case where the container 11 includes the first imaging unit 1 will be described below. (also FIG. 1 illustrates the case where the container 11 includes the first imaging unit 1).

An image captured by the first imaging unit 1 is transmitted to the controller 2 via a communication unit 12 that is provided together with the first imaging unit 1.

The communication unit 12 (hereinafter referred to as "container communication unit 12"), a communication unit 22 (hereinafter referred to as "controller communication unit 22"), a communication unit 31 (hereinafter referred to as "indicator communication unit 31"), and a communication unit 41 (hereinafter referred to as "sensor communication unit 41") including those included in the container 11, and the controller 2, the indicator 3, and the sensor 4 (described later) each include either or both of a wired module and a wireless module. The communication units 12, 22, 31, and 41 do not need to have the same configuration, and their configurations may be different from one another. The communication units 12, 22, 31, and 41 perform transmission and reception of control signals or data.

The controller 2 performs, for example, processing and the like based on an image captured by the first imaging unit 1.

The controller 2 includes a calculation unit 21, the controller communication unit 22, and a storage unit 23 as internal modules. The controller 2 physically includes a processor including a CPU (central processing unit), a GPU (graphics processing unit), or an FPGA (field-programmable gate array) as the calculation unit 21 and one or more selected from the group consisting of, for example, a semiconductor memory, a magnetic memory, an optical memory, and the like as the storage unit 23. The semiconductor memory may include a volatile memory and a non-volatile memory. The magnetic memory may include, for example, a hard disk and a magnetic tape. The optical memory may include, for example, a CD (compact disc), a DVD (digital versatile disc), and a BD (Blu-ray (registered trademark) Disc).

The calculation unit 21 may perform, as the processing and the like based on an image captured by the first imaging unit 1, for example, control relating to imaging performed by the first imaging unit 1, object detection/recognition processing relating an image captured by the first imaging unit 1, data processing relating to recognition results, control relating to indication that is performed by the indicator 3 and that relates to data processing results, and the like. The data processing relating to the recognition results includes, for example, status management of recognition results. The status management includes, for example, addition or deletion of a recognition result of an object to or from a list relating to addition or deletion of the object to or from the container 11.

The calculation unit 21 may output a recognition result and attribute information items of the recognition result including, for example, the object name (product name), the price, the movement direction, and the reliability of a recognized object. The movement direction of an object includes, for example, binary information that indicates whether the object has put in the container 11 or has been taken out of the container 11. For example, the reliability indicates, in the form of numbers, how reliable a recognition result is, and it can be said that the higher the reliability, the higher the accuracy of a recognition result.

The controller communication unit 22 may perform, for example, the following transmission and reception of control signals or data: 1. receiving an image captured by the first imaging unit 1 from the container communication unit 12, 2. receiving a signal obtained by the sensor 4 from the sensor communication unit 41, 3. transmitting and receiving various control signals or data items to and from the calculation unit 21, 4. transmitting a control signal for the first imaging unit 1 to the container communication unit 12, and 5. transmitting a control signal for the indicator 3 to the indicator communication unit 31.

The storage unit 23 may store at least one or more selected from the group consisting of an image captured by the first imaging unit 1, a recognition result obtained by the object detection/recognition processing, which is performed by the calculation unit 21 on the basis of the image captured by the first imaging unit 1, a processing result of processing performed based on the recognition result, a signal received from the sensor 4, a program relating to processing performed by the information processing system, or the like.

Note that the controller 2 is not necessarily be on-premises and may perform processing in the cloud on a Web service. Alternatively, the functions of the controller 2 may be separated in such a manner that the controller 2 performs processing on-premises or in the cloud on a module-by-module basis. For example, the calculation unit 21 may perform processing in the cloud. The storage unit 23 may perform processing on-premises.

The indicator 3 provides an indication based on a control signal or the like from the controller 2 via the indicator communication unit 31. The contents of the indication may include, for example, a recognition result that is obtained by the controller 2 or a result that is obtained by processing performed based on the recognition result.

For example, the indicator 3 includes a visual, auditory or tactile unit as means for providing the above-mentioned indication. Thus, the indicator 3 may include, for example, a display, a lamp, a speaker, or a motor. The indicator 3 may further include an input unit for correcting or confirming an indicated recognition result or the like. The input unit may include, for example, a mouse, a keyboard, a microphone, or a touch sensor, and a display may include a touch sensor as a touch display.

The sensor 4 monitors movement of a purchaser or an object and transmits detection data obtained by the monitoring to the controller 2.

The sensor 4 includes a second imaging unit that includes, for example, a weight sensor, an infrared sensor, an imaging optical system, and an imaging element. Control of each of these components of the second imaging unit or arithmetic processing relating to detection data may be performed by the controller 2, or by the sensor 4 that includes an additional unit corresponding to the controller 2.

For example, the container 11 may include the sensor 4 as a weight sensor positioned at the bottom of the container 11. When the weight detected by the weight sensor changes, the controller 2 or the weight sensor may generate, based on the assumption that an object has been taken in or out of the container 11 and based on the detection result obtained by the weight sensor, a trigger signal for causing the first imaging unit 1 to perform imaging.

In the case where the sensor 4 is provided out of the container 11, for example, a product shelf or a ceiling of a retail store may include the sensor 4. For example, as the sensor 4, a product shelf may include a weight sensor, and when the weight detected by the weight sensor changes, the weight sensor may generate a trigger signal, based on the assumption that an object has been taken in or out of the container 11. Similarly, for example, a ceiling may include the second imaging unit as the sensor 4, and when a specific action of trying to take an object in or out of the container 11 (e.g., a purchaser's motion of taking an object from a product shelf, a movement path of the object from the product shelf, or the like) is detected from an image captured by the second imaging unit, the controller 2 or the second imaging unit may generate a trigger signal, based on the assumption that the object has been taken in or out of the container 11 and based on the image captured by the second imaging unit.

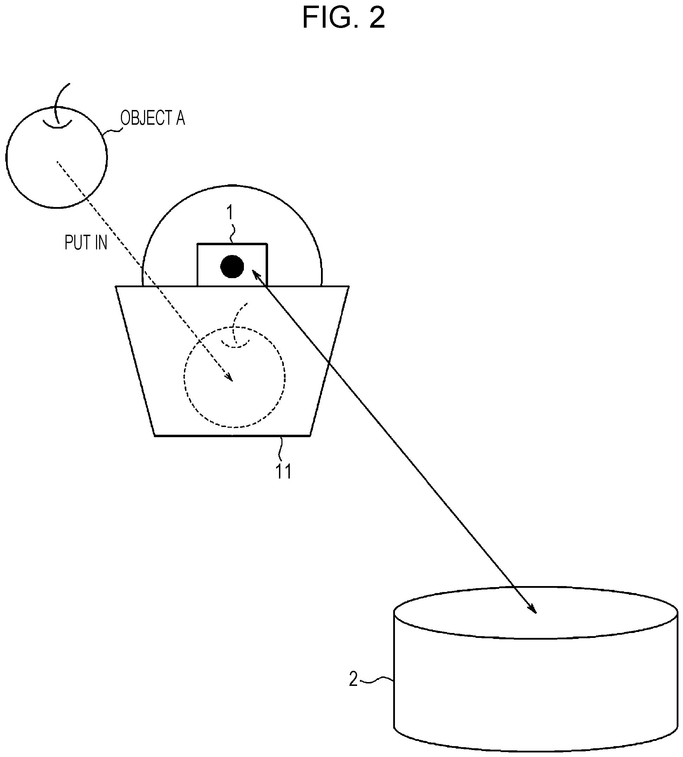

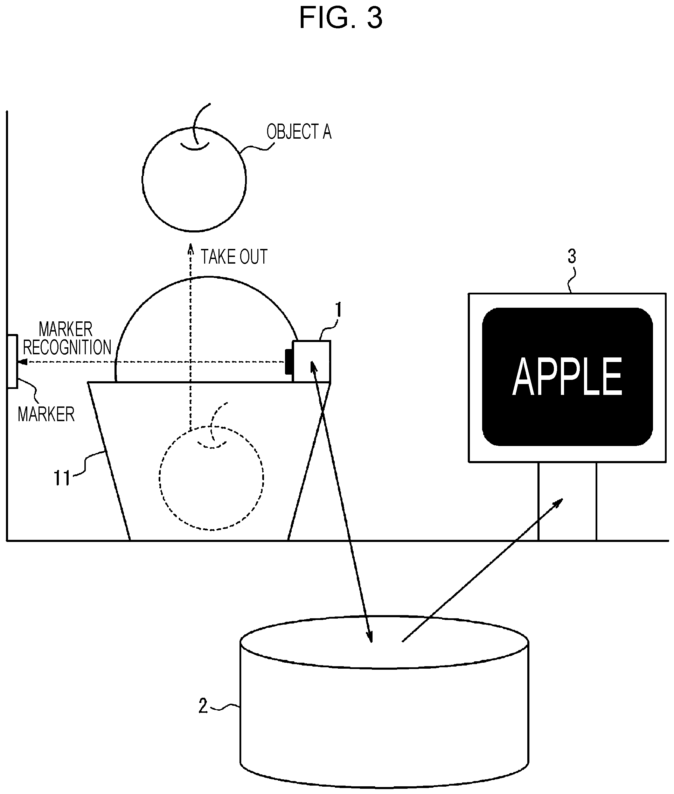

An imaging method and the like at a first stage and an imaging method and the like at a second stage will now be briefly described with reference to FIG. 2 and FIG. 3.

FIG. 2 is a conceptual diagram relating to the imaging method and the like at the first stage at which an object is put into the container 11. Here, the first stage includes a stage at which a purchaser selects a product (object) that the purchaser desires to purchase. In other words, it can be said that the first stage is a pre-recognition confirmation stage before a purchaser confirms a product to be purchased (confirms a recognition result of the product) in a specific area including a cashier counter where payment is processed.

Referring to FIG. 2, as a result of an image captured by the first imaging unit 1 being transmitted to the controller 2, the controller 2 can obtain an image in which an object A (object) is put into the container 11.

Next, the controller 2 performs object detection/recognition processing based on the image and obtains a recognition result.

FIG. 3 is a conceptual diagram relating to the imaging method and the like at the second stage at which the object is taken out of the container 11. Here, the second stage includes a state at which payment for the product that the purchaser desires to purchase is processed. In other words, it can be said that the second stage is a recognition confirmation stage at which confirmation of a product to be purchased is performed in the specific area.

Referring to FIG. 3, first, in order to make a transition from the first stage to the second stage, for example, the first imaging unit 1 captures an image of a marker that is provided in the specific area and transmits the captured image to the controller 2. After that, the controller 2 makes a transition from the first stage to the second stage. In other words, it can be said that the stage before the controller 2 recognizes the marker provided in the specific area is the first stage and that the stage after the marker has been recognized is the second stage.

Note that, determination of whether a transition from the first stage to the second stage has been made may be based on other means. That is to say, for example, a weight sensor may be provided in the specific area and may detect a change in the weight as a result of placing the container 11 onto the weight sensor, or the container 11 may include an additional sensor and the additional sensor may detect a specific signal, object, or the like including the marker provided in the specific area.

After the transition to the second stage, when the object A is taken out of the container 11, the first imaging unit 1 transmits an image of the object A, which has been captured thereby, to the controller 2.

Next, the controller 2 performs object detection/recognition processing based on the image and obtains a recognition result.

After that, the controller 2 performs final confirmation processing of the recognition result on the basis of the image captured at the first stage, at which the object is put into the container 11, and the image captured at the second stage, at which the object is taken out of the container 11.

In this case, the controller 2 may transmit a control signal so as to cause the indicator 3 to indicate the recognition result that has undergone the final confirmation processing. The controller 2 may transmit a control signal so as to cause the indicator 3 to indicate a recognition result of the object, which has been imaged by the first imaging unit 1 at the second stage, before the final confirmation processing of the recognition result. For example, as illustrated in FIG. 3, when a recognition result obtained based on the image of the object A captured at the first stage and a recognition result obtained based on the image of the object A captured at the second stage are the same recognition result "apple", the indicator 3 displays "apple".

An information processing method of the information processing system according to the first embodiment of the present disclosure will now be described. In the information processing method of the information processing system according to the first embodiment of the present disclosure, the first imaging unit 1 continuously performs imaging at any frame rate, and the controller 2 performs object detection and object recognition based on an image captured by the first imaging unit 1. Then, the controller 2 uses first to fourth lists as a method of managing the status of the recognition result and performs the final confirmation processing of the recognition result on the basis of these lists.

At the first stage, the controller 2 adds, as a purchase candidate product, an object that is determined to have been put in the container 11 to the first list storing recognition results of purchase candidate products.

At the second stage, the controller 2 adds, as a purchased product, an object that is determined to have been taken out of the container 11 to the second list storing recognition results of purchased products.

Subsequently, the first list and the second list are verified whether they exactly match each other, and in the case of exact match, the controller 2 makes no change and confirms the recognition result of the object by adding, as a final confirmed purchased product, the recognition result of the object included in the second list to the third list storing recognition results of final confirmed purchased products. When the first list and the second list do not exactly match each other, the controller 2 adds a matched recognition result of the object to the third list and adds an unmatched recognition result of the object, that is, a recognition result of a final-recognition failed product, to the fourth list.

The controller 2 may perform check-out processing based on a recognition result stored in the third list. Alternatively, the controller 2 may cause the indicator 3 to display, in the form of a list, a recognition result of an object that has been failed to be recognized and a recognition candidate object on the basis of a recognition result stored in the fourth list and may suggest that a customer makes a correction by using the input unit included in the indicator 3. The processing based on the third list or the fourth list may be common to the second embodiment and the subsequent embodiments.

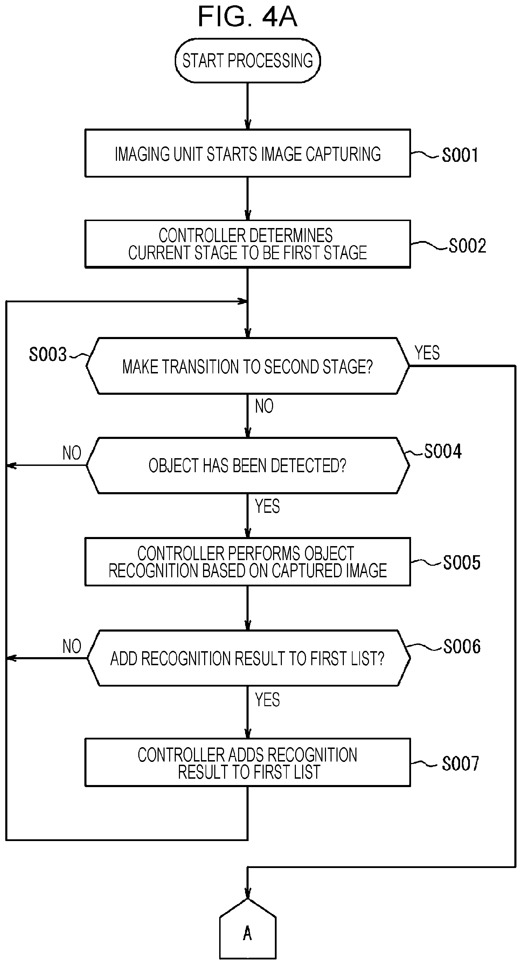

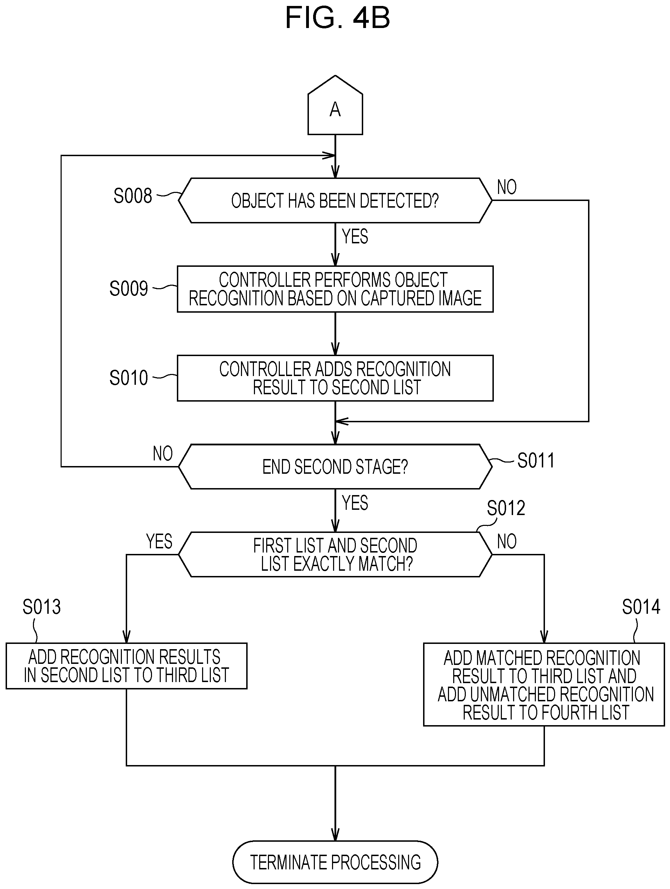

A processing flow of the information processing system according to the first embodiment of the present disclosure will be described below with reference to FIG. 4A and FIG. 4B.

<S001> The first imaging unit 1 starts continuous imaging at any frame rate. Then, the process continues to <S002>.

<S002> The controller 2 determines that the current stage is the first stage. Then, the process continues to <S003>.

<S003> The controller 2 determines whether to make a transition from the first stage to the second stage. As the determination method, for example, the method described in paragraphs [0035] to [0037] may be used. Once the controller 2 had determined that a transition from the first stage to the second stage is to be made, the controller 2 makes a transition from the first stage to the second stage. Then, the process proceeds to <S008>. If the controller 2 does not determine that a transition from the first stage to the second stage is to be made, the process continues to <S004>.

<S004> The controller 2 determines whether an object has been detected based on an image captured by the first imaging unit 1. Once the controller 2 has detected an object, the process continues to <S005>. When the controller 2 has not detected any object, the process returns to <S003>.

Note that, as the method of detecting an object, an object detection method that has been commonly used may be used. Examples of such an object detection method that has been commonly used include method utilizing segmentation, semantic segmentation and/or bounding box or to perform pattern matching or machine learning including deep learning in conjunction with object recognition (described later).

<S005>The controller 2 performs object recognition based on the result of the object detection. Then, the process continues to <S006>.

Note that, as the method of recognizing an object, an object recognition method that has been commonly used may be used. Examples of such an object recognition method that has been commonly used include pattern matching or machine learning including deep learning.

<S006> The controller 2 determines whether to add a recognition result as a purchase candidate product to the first list. Criteria for determining that the recognition result is to be added to the first list include, for example, the reliability of the recognition result that is equal to or higher than a predetermined threshold and determination that the object is to be moved so as to be put into the container 11. Once the controller 2 had determined that the recognition result is to be added as a purchase candidate product to the first list, the process continues to <S007>. If the controller 2 does not determine that the recognition result is to be added as a purchase candidate product to the first list, the controller 2 discards the recognition result, and the process returns to <S003>.

<S007> The controller 2 adds the recognition result to the first list. Then, the process returns to <S003>.

<S008> The controller 2 determines whether an object has been detected based on an image captured by the first imaging unit 1. Once the controller 2 has detected an object, the process continues to <S009>. When the controller 2 has not detected any object, the process proceeds to <S011>.

<S009> The controller 2 performs object recognition based on the result of the object detection. Then, the process continues to <S010>.

<S010> The controller 2 adds the recognition result to the second list. Then, the process continues to <S011>.

<S011> The controller 2 determines whether to end the second stage. An example of the determination method is the case where no object is detected for a certain period of time. Once the controller 2 had determined that the second stage is to be ended, the process continues to <S012>. If the controller 2 does not determine that the second stage is to be ended, the process returns to <S008>.

<S012>The controller 2 determines whether a recognition result included in the first list and a recognition result included in the second list exactly match each other. When the recognition result included in the first list and the recognition result included in the second list exactly match each other, the process continues to <S013>. When the recognition result included in the first list and the recognition result included in the second list do not exactly match each other, the process proceeds to <S014>.

<S013> The controller 2 copies a recognition result included in the second list and adds the copied recognition result to the third list. After that, the information processing system terminates the processing.

<S014> Regarding an object recognition result in the first list and an object recognition result in the second list that match each other, the controller 2 copies the recognition result included in the second list and adds the copied recognition result to the third list. Regarding an object recognition result in the first list and an object recognition result in the second list that do not match each other, the controller 2 adds the unmatched object recognition results to the fourth list. After that, the controller 2 performs processing based on the third list and the fourth list and then terminates the whole processing.

An information processing method of the information processing system according to the second embodiment of the present disclosure will now be described. Although continuous imaging is performed in the information processing method of the information processing system according to the first embodiment of the present disclosure, there is a concern that the amount of data handled by the controller 2 may increase. Accordingly, in the information processing method of the information processing system according to the second embodiment of the present disclosure, the timing at which the first imaging unit 1 performs imaging is estimated by predicting the timing at which a purchaser puts an object into the container 11. Then, the first imaging unit 1 performs imaging based on the estimated imaging timing. By employing this method, it will not be necessary for the first imaging unit 1 to continuously perform imaging.

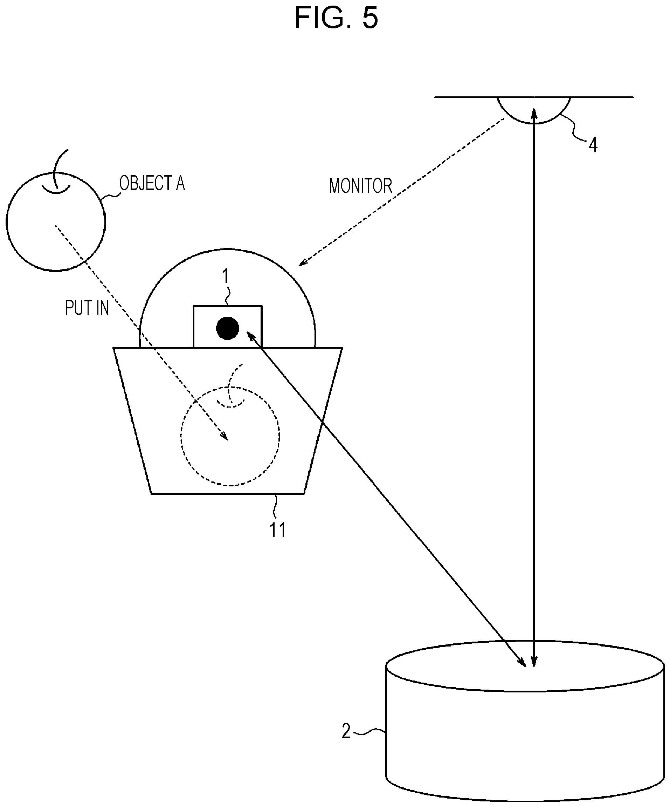

FIG. 5 is a conceptual diagram relating to an imaging method and the like at the first stage in the second embodiment. Compared with FIG. 2 and the first embodiment, the sensor 4 is added as a new component in FIG. 5. Here, although a ceiling of a retail store includes the sensor 4, in practice, the way in which the sensor 4 is provided is not limited to this pattern.

The sensor 4 monitors the container 11 and/or a customer who is holding the container 11 and transmits obtained detection data to the controller 2.

The controller 2 determines, based on the detection data obtained by the sensor 4, whether the object A is put into the container 11. As the determination method, for example, the method described in paragraphs [0027] to [0030] may be used.

Once the controller 2 has determined that the object A is put into the container 11 based on the detection data obtained by the sensor 4, the controller 2 transmits a trigger signal for causing the first imaging unit 1 to perform imaging.

The first imaging unit 1 performs imaging in response to receiving a trigger signal from the controller 2. After that, the first imaging unit 1 transmits a captured image to the controller 2.

Note that FIG. 5 illustrates the imaging method at the first stage, and an imaging method same as, and/or similar to, the imaging method at the first stage may be used at the second stage.

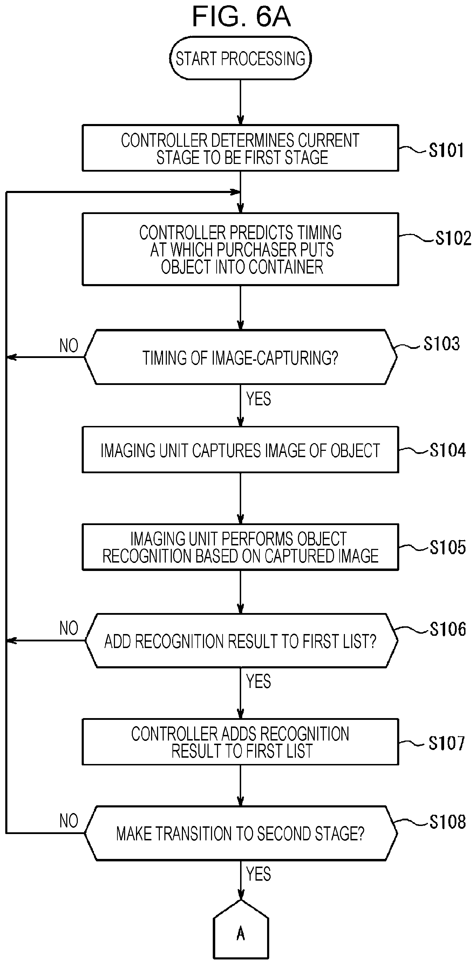

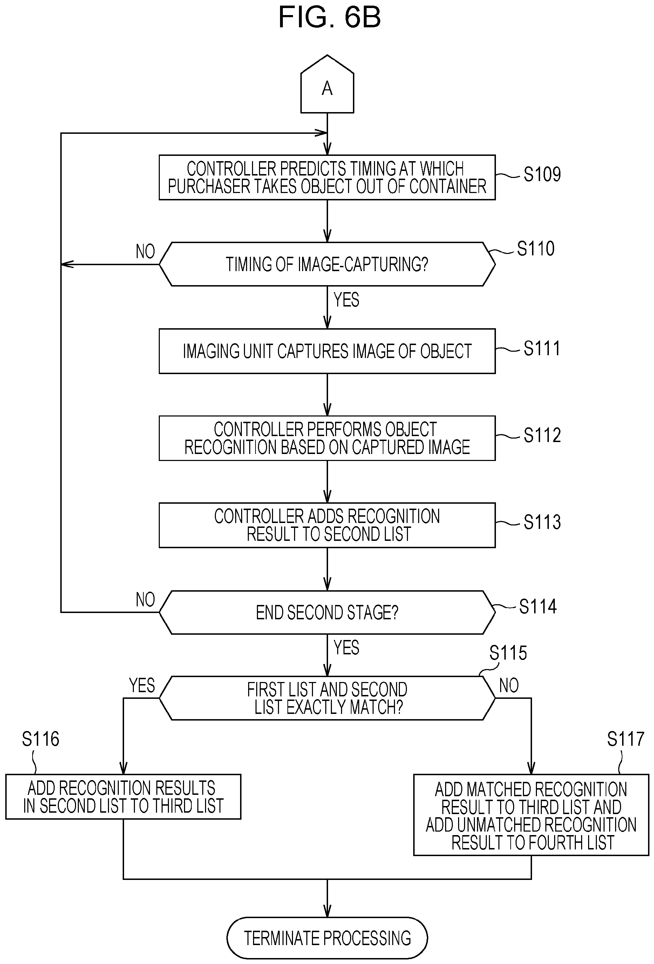

A processing flow of the information processing system according to the second embodiment of the present disclosure will be described below with reference to FIG. 6A and FIG. 6B.

The processing that is performed in <S101> corresponds to <S002> of the first embodiment. After the processing has been performed, the process continues to <S102>.

<S102> The controller 2 predicts, based on detection data obtained by the sensor 4, the timing at which a purchaser puts an object into the container 11. Then, the process continues to <S103>.

<S103> The controller 2 determines, based on the prediction result regarding the timing at which a purchaser puts an object into the container 11, whether the timing at which the first imaging unit 1 performs imaging has come. Once the controller 2 has determined that the timing at which the first imaging unit 1 performs imaging has come, the controller 2 transmits a trigger signal to the first imaging unit 1. Then, the process continues to <S104>. When the controller 2 determines that the timing at which the first imaging unit 1 performs imaging has not come, the process returns to <S102>.

<S104> The first imaging unit 1 performs imaging of an object on the basis of the trigger signal received from the controller 2. Then, the process continues to <S105>.

The processing that is performed in <S105> corresponds to <S005> of the first embodiment. After the processing has been performed, the process continues to <S106>.

The processing that is performed in <S106> corresponds to <S006> of the first embodiment. Once the controller 2 had determined that the recognition result is to be added as a purchase candidate product to the first list, the process continues to <S107>. If the controller 2 does not determine that the recognition result is to be added as a purchase candidate product to the first list, the controller 2 discards the recognition result, and the process returns to <S102>.

The processing that is performed in <S107> corresponds to <S007> of the first embodiment. After the processing has been performed, the process continues to <S108>.

The processing that is performed in <S108> corresponds to <S003> of the first embodiment. Once the controller 2 had determined that a transition from the first stage to the second stage is to be made, the controller 2 makes a transition from the first stage to the second stage. Then, the process continues to <S109>. If the controller 2 does not determine that a transition from the first stage to the second stage is to be made, the process returns to <S102>.

<S109> The controller 2 predicts, based on detection data obtained by the sensor 4, the timing at which the purchaser takes an object out of the container 11. Then, the process continues to <S110>.

The processing that is performed in <S110> corresponds to <S103>. Once the controller 2 has determined that the timing at which the first imaging unit 1 performs imaging has come, the controller 2 transmits a trigger signal to the first imaging unit 1. Then, the process continues to <S111>. When the controller 2 determines that the timing at which the first imaging unit 1 performs imaging has not come, the process returns to <S109>.

The processing operations that are performed in <S111> to <S113> correspond to <S104>, <S105>, and <S010>, respectively. After the processing of <S111> has been performed, the process continues to <S112>. After the processing of <S112> has been performed, the process continues to <S113>. After the processing of <S113> has been performed, the process continues to <S114>.

The processing that is performed in <S114> corresponds to <S011> of the first embodiment. Once the controller 2 had determined that the second stage is to be ended, the process continues to <S115>. If the controller 2 does not determine that the second stage is to be ended, the process returns to <S109>.

The processing that is performed in <S115> corresponds to <S012> of the first embodiment. When the recognition result included in the first list and the recognition result included in the second list exactly match each other, the process continues to <S116>. When the recognition result included in the first list and the recognition result included in the second list do not exactly match each other, the process proceeds to <S117>.

The processing operations that are performed in <S116> and <S117> correspond to <S013> and <S014>, respectively. The controller 2 performs these processing operations and processing based on the third list and the fourth list and then terminates the whole processing.

An information processing method of the information processing system according to the third embodiment of the present disclosure will now be described. In the information processing methods of the information processing systems according to the first and second embodiments of the present disclosure, although processing for determining whether a recognition result based on an image captured at the first stage and a recognition result based on an image captured at the second stage match each other is inevitably performed, a case may be assumed in which it is not necessary to perform imaging twice and to perform processing based on captured images, and such a case is, for example, the case where a recognition result at the first stage has a high recognition rate. Accordingly, in the information processing method of the information processing system according to the third embodiment of the present disclosure, when the recognition rate of object recognition based on an image captured by the first imaging unit 1 at the first stage satisfies a predetermined condition (e.g., an appropriate threshold such as a recognition rate of equal to or greater than 90%), it is directly added to the third list. When the controller 2 confirms that all objects have been added to the third list, object recognition based on an image captured at the second stage is not performed. By employing this method, reduction in the amount of data to be processed by the controller 2 is expected.

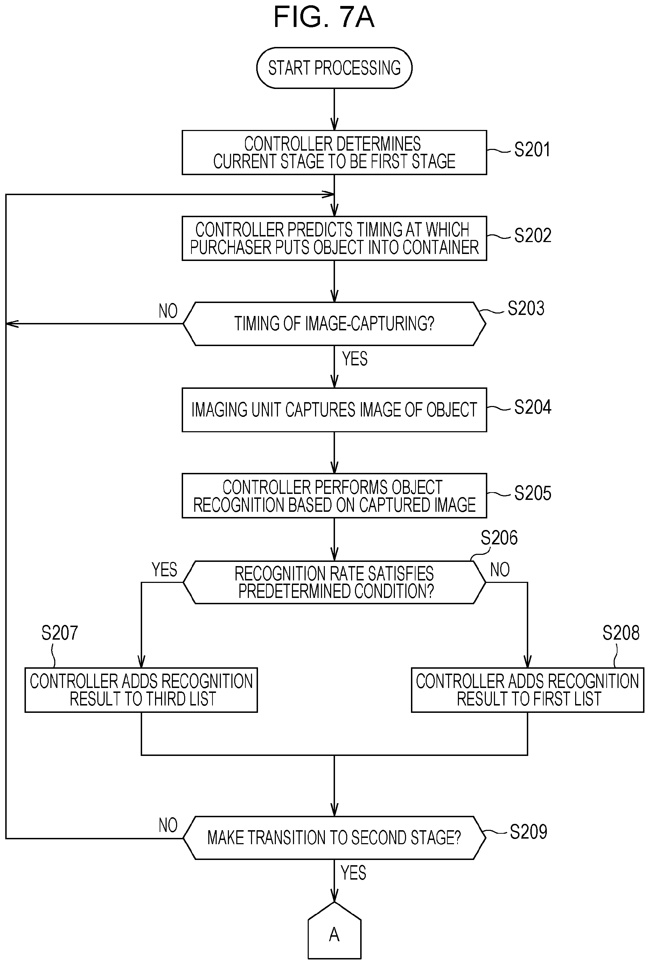

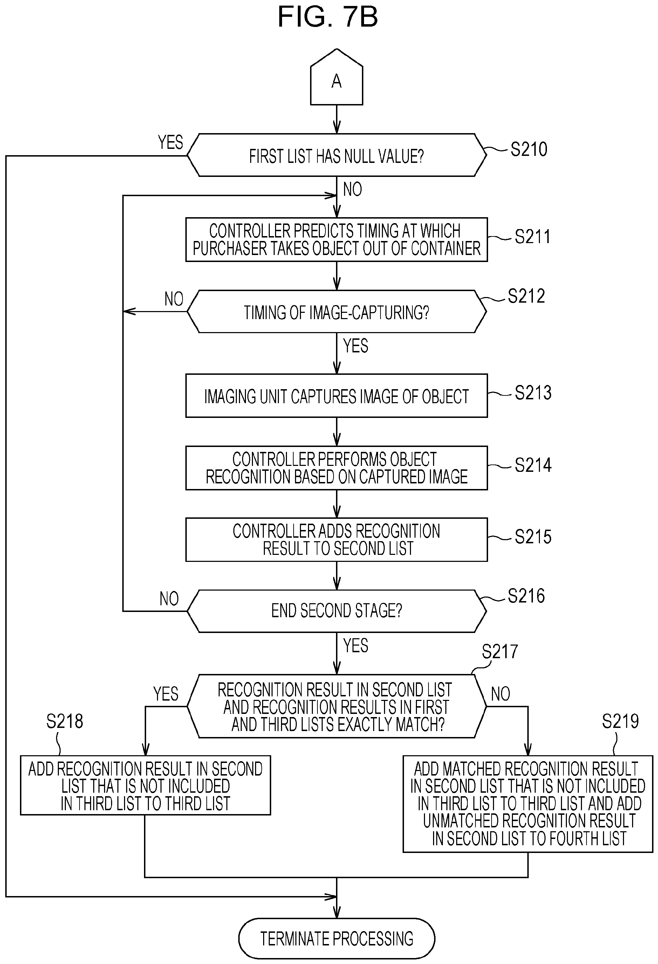

A processing flow of the information processing system according to the first embodiment of the present disclosure will be described below with reference to FIG. 7A and FIG. 7B.

The processing operations that are performed in <S201> to <S205> correspond to <S101> to <S105> of the second embodiment, respectively. After the processing of <S201> has been performed, the process continues to <S202>. After the processing of <S202> has been performed, the process continues to <S203>. After the processing of <S203> has been performed, the process continues to <S204>. After the processing of <S204> has been performed, the process continues to <S205>. After the processing of <S205> has been performed, the process continues to <S206>.

<S206> The controller 2 determines, based on an image captured by the first imaging unit 1 at the first stage, whether a recognition rate obtained by performing object recognition satisfies a predetermined condition. Once the controller 2 has determined that a recognition result satisfies the predetermined condition, the process continues to <S207>. If the controller 2 does not determine that the recognition result satisfies the predetermined condition, the process proceeds to <S208>.

<S207> The controller 2 adds the recognition result to the third list. Then, the process proceeds to <S209>.

<S208> The controller 2 adds the recognition result to the first list. Then, the process continues to <S209>.

The processing that is performed in <S209> corresponds to <S108> of the second embodiment. Once the controller 2 had determined that a transition from the first stage to the second stage is to be made, the controller 2 makes a transition from the first stage to the second stage. Then, the process continues to <S210>. If the controller 2 does not determine that a transition from the first stage to the second stage is to be made, the process returns to <S202>.

<S210> The controller 2 determines whether the first list has a null value, that is, whether all the recognized objects have satisfied a predetermined condition. Once the controller 2 has determined that the first list has a null value, the information processing system terminates the processing. If the controller 2 does not determine that the first list has a null value, the process continues to <S211>.

The processing that is performed in <S211> corresponds to <S109> of the second embodiment. After the processing has been performed, the process continues to <S212>.

The processing that is performed in <S212> corresponds to <S110> of the second embodiment. Once the controller 2 has determined that the timing at which the first imaging unit 1 performs imaging has come, the controller 2 transmits a trigger signal to the first imaging unit 1. Then, the process continues to <S213>. When the controller 2 determines that the timing at which the first imaging unit 1 performs imaging has not come, the process returns to <S211>.

The processing operations that are performed in <S213> to <S215> correspond to <S111> to <S113> of the second embodiment, respectively. After the processing of <S213> has been performed, the process continues to <S214>. After the processing of <S214> has been performed, the process continues to <S215>. After the processing of <S215> has been performed, the process continues to <S216>.

The processing that is performed in <S216> corresponds to <S114> of the second embodiment. Once the controller 2 had determined that the second stage is to be ended, the process continues to <S217>. If the controller 2 does not determine that the second stage is to be ended, the process returns to <S211>.

<S217> The controller 2 determines whether a combination of a recognition result included in the first list and a recognition result included in the third list exactly matches a recognition result included in the second list. When the combination of the recognition result included in the first list and the recognition result included in the third list exactly matches the recognition result included in the second list, the process continues to <S218>. If the combination of the recognition result included in the first list and the recognition result included in the third list does not exactly match the recognition result included in the second list, the process proceeds to <S219>.

The processing operations that are performed in <S218> and <S219> correspond to <S116> and <S117> of the second embodiment, respectively. After these processing operations have been performed, the information processing system terminates the processing.

The information processing methods of the information processing systems according to the first to the third embodiments have been described above.

Note that, in the above description, although the controller 2 adds a recognition result of an object to the third list or the fourth list, after which, the processing is terminated, for example, as described in paragraphs [0025] and [0026], after the controller 2 has added a recognition result of an object to the third list or the fourth list, the controller 2 may transmit a control signal to the indicator 3 based on the third list or the fourth list.

For example, the indicator 3 may display based on the fourth list a recognition result of an object that has been failed to be recognized and a recognition candidate object in the form of a list and may suggest that a customer makes a correction by using the input unit included in the indicator 3.

In the case where a recognition result of an object is included in the fourth list, the indicator 3 may give a customer, an employee of a retail store, or the like an error warning.

The indicator 3 may display the total price based on the third list and the fourth list that reflects the above-mentioned correction made by a customer and suggest that the customer processes payment.

For example, in the information processing methods of the information processing systems according to the first to the third embodiments, when the controller 2 detects, based on a direction of movement of an object included in a recognition result of the first imaging unit 1 at the first stage, the object which has already been added to the first list being taken out of the container 11, the controller 2 may remove a recognition result of the object, which has taken out of the container 11, from the first list.

In the information processing methods of the information processing systems according to the first to the third embodiments, although comparison of the first list and the second list is performed after the second list has been generated, for example, at the same time as a recognition result is added to the second list, the first list may be checked whether it includes the added recognition result.

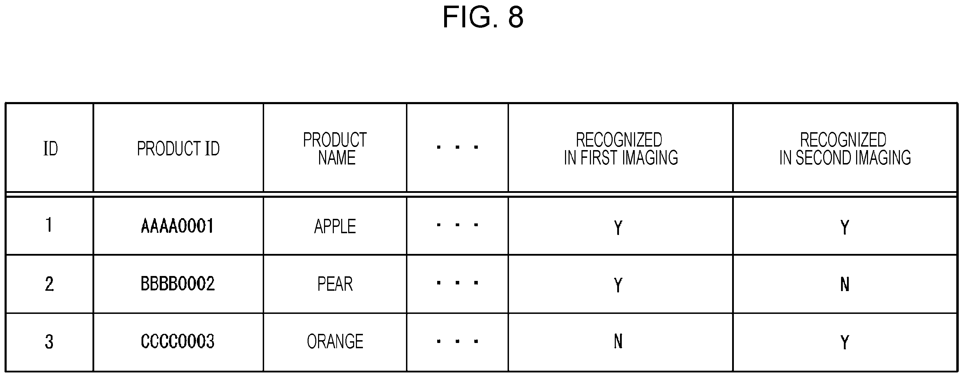

In the information processing methods of the information processing systems according to the first to the third embodiments, although the controller 2 performs processing based on the first to fourth lists, as illustrated in FIG. 8, for example, "recognized in first imaging" and "recognized in second imaging" that correspond to the first list and the second list, respectively, and each of which is represented by one of two values that are Yes and No (hereinafter referred to as "Y" and "N") may be newly used as an attribute of a recognition result that is included in the first list without using the second to the fourth lists (the quotation marks will hereinafter be omitted). In this case, Y may be given to the recognized in first imaging for a recognition result that is added at the first stage, and Y may be given to the recognized in second imaging for a recognition result that is added at the second stage. In other words, for a recognition result of an object that is recognized both at the first stage and the second stage, Y is given to the recognized in first imaging and to the recognized in second imaging. For a recognition result of an object that is recognized at the first stage and that is not recognized at the second stage, Y is given to the recognized in first imaging, and N is given to the recognized in second imaging. For a recognition result of an object that is not recognized at the first stage and that is recognized at the second stage, N is given to the recognized in first imaging, and Y is given to the recognized in second imaging.

Referring to FIG. 8, for example, for the apple whose ID number is 1, Y is given to both the recognized in first imaging and the recognized in second imaging, and the controller 2 may process the apple as a final confirmed purchased product that corresponds to the third list. In contrast, for the pear whose ID number is 2 and the orange whose ID number is 3, N is given to one of the recognized in first imaging and the recognized in second imaging, and the controller 2 may process the pear and the orange as final-recognition failed products that correspond to the fourth list.

In the information processing method of the information processing system according to the third embodiment, the controller 2 may temporarily store a recognition result of an object that is obtained at the first stage and whose recognition rate does not satisfy a predetermined condition into the storage unit 23, and at the second stage, the controller 2 may prompt, by using the indicator 3, a customer to cause the first imaging unit 1 to perform imaging on only an object having a low recognition rate. For example, in the case where the indicator 3 includes a display, an object having a low recognition rate may be extracted from a captured image and displayed on the display. In other words, the controller 2 may perform processing for final confirmation of a recognition result on an object recognition result whose recognition rate satisfies the predetermined condition at the first stage and may perform processing based on an image captured by the first imaging unit 1 at the second stage on an object recognition result whose recognition rate does not satisfy the predetermined condition at the first stage.

In the information processing methods of the information processing systems according to the first to the third embodiments, although a customer uses the container 11, a customer does not necessarily use the container 11, and it is also assumed that a customer holds an object with their own hand. In this case, for example, a product shelf, a ceiling, or the like of a retail store may include the first imaging unit 1 instead of the container 11 including the first imaging unit 1, and the first imaging unit 1 may constantly track the customer, and for example, the information processing system may always associate the customer with the first list.

In the information processing methods of the information processing systems according to the first to the third embodiments, although the same first imaging unit 1 captures images of an object at the first stage and the second stage, the same first imaging unit 1 is not necessarily used, and different first imaging units 1 may be used in such a manner that, for example, the first imaging unit 1 that the container 11 includes is used as the first imaging unit 1 at the first stage and that the first imaging unit 1 that a cash register terminal includes is used as the first imaging unit 1 at the second stage.

Although the information processing system, the information processing apparatus, and the information processing method have been described above as the solutions of the present disclosure, the present disclosure can also be realized as embodiments including these. The present disclosure can also be realized as a program that substantially corresponds to these and a storage medium in which the program is recorded, and it is to be understood that these are also within the scope of the present disclosure.

Although the present disclosure has been described above based on the drawings and the embodiments, it is to be noted that various modifications and/or corrections may be easily made by those skilled in the art on the basis of the present disclosure. Therefore, it is to be noted that such modifications and/or corrections are within the scope of the present invention. For example, the functions and the like included in the components and the like can be rearranged so as not to be logically inconsistent, and a plurality of components can be combined into one or divided.

Note that, a system including various modules and/or units that perform specific functions is disclosed in the present disclosure, and it is to be note that these modules and units are schematically described to explain their functionalities, and they do not necessarily represent specific hardware and/or software. In that sense, these modules, units and other components may at least be hardware and/or software implemented so as to substantially perform the specific functions described herein. The various functions of the different components may be any combination or separation of hardware and/or software and can be used separately or in any combination. As described above, various aspects of the present disclosure can be implemented in many different embodiments, and all the embodiments are within the scope of the present disclosure.

### REFERENCE SIGNS

- 1: first imaging unit
- 2: controller
- 3: indicator
- 4: sensor
- 11: container
- 12: container communication unit
- 21: calculation unit
- 22: controller communication unit
- 23: storage unit
- 31: indicator communication unit
- 41: sensor communication unit

## Claims

1. An information processing system comprising:
a first imaging unit; and
a controller configured to perform processing relating to an image that is captured by the first imaging unit,
wherein the controller performs the processing based on an image captured at a first stage at which an object is put into a container and an image captured at a second stage at which the object is taken out of the container.

2. The information processing system according to claim 1,
wherein the controller recognizes the object included in the image captured at the first stage and the object included in the image captured at the second stage and performs the processing based on a recognition result of the object.

3. The information processing system according to claim 2,
wherein the controller performs status management of the recognition result.

4. The information processing system according to claim 3,
wherein the status management comprises addition of the object recognized in the image captured at the first stage to a first list and addition of the object recognized in the image captured at the second stage to a second list, the additions being performed by the controller.

5. The information processing system according to claim 4,
wherein the controller confirms, based on the first list and the second list, the recognition result of the object.

6. The information processing system according to any one of Claims 1 to 5,
wherein the container comprises the first imaging unit.

7. The information processing system according to any one of Claims 1 to 6,
wherein the first stage is a pre-recognition confirmation stage before confirmation of a recognition result of the object is performed in a specific area, and
wherein the second stage is a recognition confirmation stage at which the confirmation of the recognition result is performed in the specific area.

8. The information processing system according to claim 7,
wherein the controller determines that a current stage is the pre-recognition confirmation stage if the controller has not yet recognized a marker provided in the specific area, and
wherein the controller determines that the current stage is the recognition confirmation stage if the controller has already recognized the marker.

9. The information processing system according to any one of Claims 1 to 8,
wherein the first imaging unit performs imaging based on a detection result obtained by a sensor that is additionally provided.

10. The information processing system according to claim 9,
wherein the sensor is a weight sensor that the container comprises, and
wherein the first imaging unit performs imaging in response to a total weight detected by the weight sensor being changed.

11. The information processing system according to claim 9,
wherein the sensor is a weight sensor that is provided out of the container, an infrared sensor, or a second imaging unit.

12. The information processing system according to any one of Claims 1 to 11,
wherein the object is a product that a purchaser desires to purchase.

13. An information processing apparatus comprising:
a controller configured to perform processing relating to an image that is captured by the first imaging unit,
wherein the controller performs the processing based on an image captured at a first stage at which an object is put into a container and an image captured at a second stage at which the object is taken out of the container.

14. An information processing method comprising:
causing a first imaging unit to perform imaging at a first stage at which an object is put into a container;
causing the first imaging unit to perform imaging at a second stage at which the object is taken out of the container; and
performing processing based on an image captured by the first imaging unit at the first stage and an image captured by the first imaging unit at the second stage.
